Europäisches Patentamt

(19) European Patent Office

Office européen des brevets

(11) Numéro de publication: **0 033 698**
**A1**

(12) **DEMANDE DE BREVET EUROPEEN**

(21) Numéro de dépôt: **81400149.1**

(22) Date de dépôt: **30.01.81**

(51) Int. Cl.³: **F 15 B 20/00**
**F 04 C 15/04, B 62 D 5/06**

(30) Priorité: **31.01.80 ES 488092**

(43) Date de publication de la demande:
**12.08.81 Bulletin 81/32**

(84) Etats contractants désignés:
**DE FR GB IT SE**

(71) Demandeur: **BENDIBERICA S.A.**
**Balmès 243**
**Barcelona 6(ES)**

(72) Inventeur: **Bacardit, Juan Simon**
**Calle Mallorca 451 6 4aA**
**Barcelona 13(ES)**

(74) Mandataire: **Barbin le Bourhis, Joel et al,**
**Service Brevets Bendix 44 rue François 1er**
**F-75008 Paris(FR)**

(54) Soupape de sécurité de circuits hydrauliques.

㊼ Soupape de sécurité sensible à une annulation de débit dans une branche d'un branche d'un circuit hydraulique;

La soupape comprend un étrangleur (8) (venturi) susceptible d'être inséré dans le circuit hydraulique à surveiller, une chambre haute pression (12) communiquant avec l'amont de l'étrangleur, une chambre basse pression (19) communiquant avec l'aval de l'étrangleur, une chambre de décharge (13) et un tiroir (15) réglant la communication entre les chambres (12) et (19) en fonction de la perte de charge dans le venturi (8);

Application à la protection d'un système de servodirection.

FIG_1

EP 0 033 698 A1

## SOUPAPE DE SECURITE DE CIRCUITS HYDRAULIQUES

La présente invention se réfère à une soupape destinée à protéger des circuits hydrauliques en général, comprenant une source de fluide hydraulique sous pression et un récepteur qui doit être actionné par ce fluide, contre des surpressions résultant de l'annulation du débit consommé par le récepteur, arrivant à une fin de course, par exemple, ou lorsque survient une surcharge ou un blocage des dispositifs commandés par le récepteur. Des situations de ce genre surviennent dans des systèmes hydrauliques en général et comme exemples concrets, on peut citer des servo-mécanismes pour machines de chantier, des servo-directions pour véhicules et des automatismes hydrauliques de machines en général.

Dans la plupart des applications pour lesquelles on utilise le fluide hydraulique à des pressions relativement élevées, la source de fluide hydraulique sous pression est habituellement une pompe volumétrique, à palettes par exemple, et par conséquent, à fonctionnement pratiquement positif, de sorte que l'annulation du débit de consommation du récepteur peut causer des dommages considérables dans le système hydraulique.

Ce problème est résolu couramment au moyen d'une soupape de dérivation ou by-pass, raccordée entre l'entrée et la sortie de la pompe, disposée afin de permettre le passage de la sortie à l'entrée, et prévue de façon à ne s'ouvrir que lorsque la pression de sortie de la pompe atteint un niveau notablement supérieur à la pression nominale de travail du système. Dans ces conditions, les périodes de fonctionnement de la soupape de dérivation, très fréquentes dans tous les systèmes munis de fins de course, constituent une dépense inutile d'énergie, étant donné que la pompe doit engendrer une pression supérieure à la pression maximale de fonctionnement, en plus du fait de représenter une source d'usure prématurée.

L'invention cherche à fournir une nouvelle solution à cette situation au moyen d'une soupape de sécurité, qui répond à l'annulation du débit absorbé par le dispositif récepteur afin de mettre en communication directe la sortie avec l'entrée de la pompe avec une perte
de charge très réduite.

Selon la présente invention, la soupape de sécurité de
circuits hydrauliques sensible à une absence de débit, pour circuits comprenant une source de fluide hydraulique sous pression et un récepteur
devant être actionné par ce fluide, pour la protection contre les surpressions résultant de l'annulation du débit consommé par le récepteur
est caractérisée essentiellement en ce qu'elle comprend un dispositif
étrangleur, intercalé dans le conduit reliant la source avec l'entrée du
récepteur et capable de créer, dans le fluide circulant, une perte de
charge qui occasionne une pression élevée à l'extrémité en amont de
l'étrangleur et une pression basse à l'extrémité en aval de celui-ci, un
espace fermé, à l'intérieur duquel se déplace hermétiquement un élément
obturateur qui le divise en une chambre haute pression reliée avec l'extrémité en amont de l'étrangleur, et une chambre basse pression, reliée
à l'extrémité en aval de l'étrangleur, l'élément obturateur étant repoussé élastiquement vers la chambre à haute pression ; une chambre de
décharge reliée avec l'entrée de la pompe ou une décharge et avec la
chambre haute pression au travers des moyens d'obturation variable comprenant ledit élément obturateur, la disposition étant telle que la
charge élastique de l'élément obturateur le maintient dans une position
dans laquelle lesdits moyens d'obturation sont ouverts et établissent
une communication entre la chambre haute pression et la chambre de décharge, en l'absence de différence de pression entre les chambres haute
et basse pression de l'enceinte, cet élément étant néanmoins déplacé
quand un débit de fluide traversant l'étrangleur amène l'élément obturateur à fermer la communication entre la chambre haute pression et la
chambre de décharge.

Dans une version préférée de l'invention, l'élément de
fermeture est un tiroir mobile, logé hermétiquement dans un cylindre
fermé à ses deux extrémités et formant les espaces haute et basse pression, repoussé vers le premier par un ressort situé dans le second, et
muni d'une gorge annulaire qui forme la troisième chambre adjacente à
la chambre haute pression, le tiroir étant creusé de lumières latérales
qui coopèrent avec la portion de cylindre comprise entre ces deux
chambres formant le dispositif de soupape. Si les lumières ont la forme
de dépressions superficielles et si la course du tiroir est supérieure à la distance existant en position de repos entre l'extrémité de ce tiroir, correspondant à la chambre haute pression, et la chambre de décharge, le tiroir peut être déplacé sous la différence de pression de fonctionnement jusqu'à ce que l'extrémité du tiroir atteigne la chambre de décharge et la mette à nouveau en communication avec la chambre haute pression ; à partir de ce moment, la soupape commence à fonctionner également comme un régulateur de débit ; dans ce cas, on peut prévoir que le dispositif élastique ait une force variable afin de s'adapter aux deux conditions de fonctionnement, ou encore, on peut prévoir un dispositif élastique parallèle au précédent et avec lequel le tiroir vient s'accoupler lorsqu'il atteint la position de régulation de débit, pour recevoir la charge correspondante.

Dans une autre version, le tiroir est muni de clapets capables d'agir comme une soupape de dérivation ou un limiteur de pression maximale. A cet effet, le tiroir est creusé d'une cavité intérieure, communiquant, d'une part avec la chambre de décharge, et d'autre part avec la chambre haute pression à travers un siège de clapet sur lequel s'applique un élément obturateur, taré par un dispositif élastique afin de délivrer la pression de travail maximale.

Ces deux réalisations sont compatibles et peuvent être incorporées simultanément dans un seul tiroir distributeur.

La réalisation devient particulièrement simple si les conduites d'arrivée et de sortie de fluide sous pression sont reliées respectivement aux chambres à haute et basse pression du cylindre, et si le tiroir est de forme tubulaire de manière à permettre le passage du fluide, le dispositif étrangleur étant prévu également à l'intérieur du tiroir.

La soupape correspondant à cette invention peut être avantageusement incorporée au corps d'une pompe fournissant du fluide hydraulique sous pression à des systèmes hydrauliques, les extrémités d'entrée et de sortie du dispositif étrangleur étant reliées respectivement à la chambre de pression et au raccord de sortie de la pompe, et les chambres à haute pression et la troisième chambre de la soupape étant reliées respectivement à la chambre de pression de la pompe et à la chambre d'aspiration de celle-ci.

Dans une autre version, la soupape peut être incorporée dans le corps d'un boîtier de servo-direction pour véhicules, auquel cas les extrémités d'entrée et de sortie du dispositif étrangleur se trouvent reliées respectivement à la conduite partant du raccord d'entrée de l'huile et à la conduite qui mène au raccord de sortie. Par exemple, l'élément tubulaire de fermeture avec passage étrangleur peut être mobile dans un cylindre intégré à la conduite reliée au raccord d'entrée d'huile du boîtier de servo-direction.

Les dessins ci-joints, à titre d'exemple non limitatif de la portée de la présente invention, montrent de façon schématique la manière la plus appropriée d'appliquer cette invention.

Dans ces dessins :

- la figure 1 est une coupe axiale d'une soupape de sécurité conforme à l'invention ;

- la figure 2 est une vue équivalente d'une soupape remplissant aussi la fonction de régulation de débit ;

- la figure 3 montre une autre forme de soupape de sécurité et de limitation de pression maximale ;

- la figure 4 montre la possibilité d'incorporer à la soupape de la première figure les fonctions de régulation de débit et de limitation de pression maximale ;

- la figure 5 représente une forme modifiée de soupape de sécurité ;

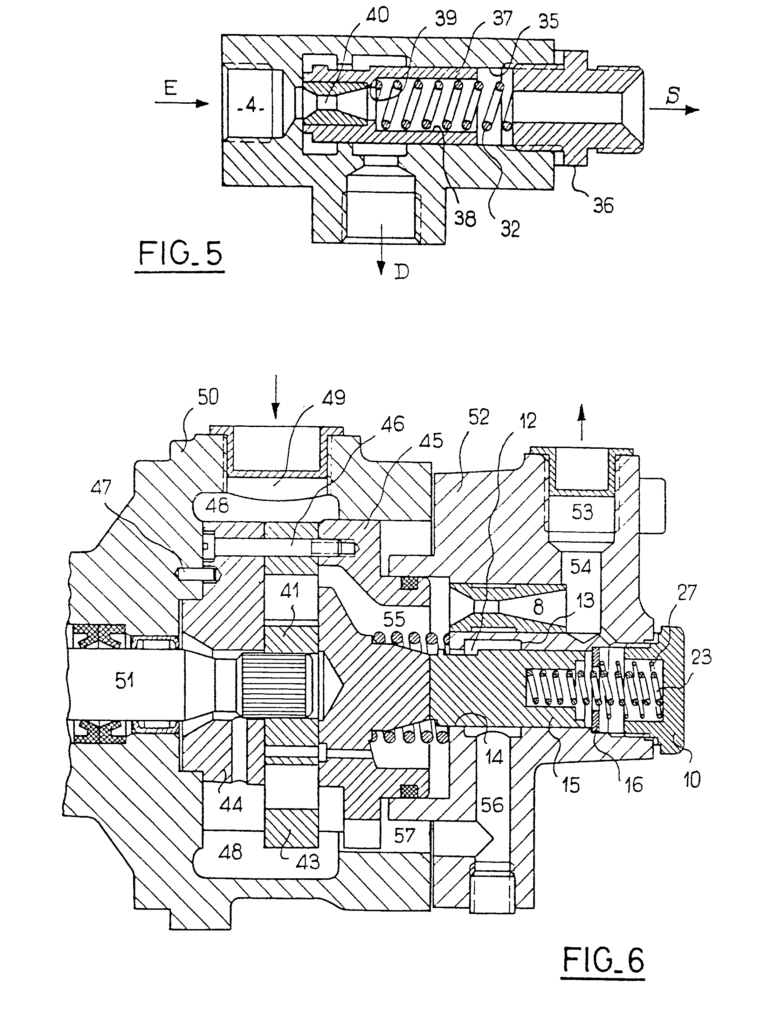

- les figures 5 et 6 représentent une pompe à palettes à laquelle une soupape de sécurité a été incorporée conformément à l'invention ; et

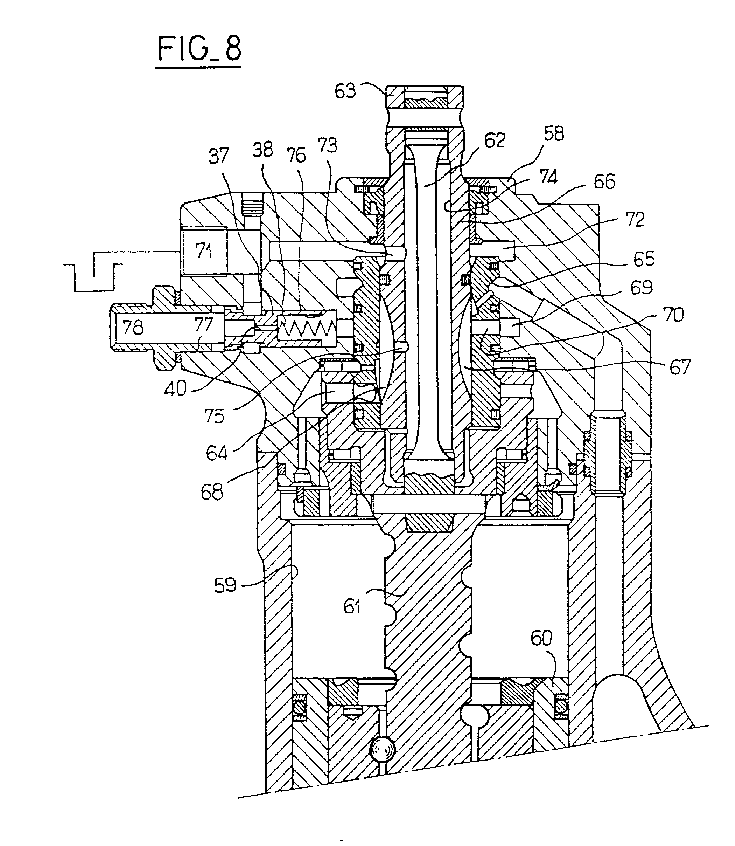

- la figure 8 montre en coupe axiale une partie d'un boîtier de servo-direction pour véhicules avec incorporation d'une soupape équivalente à la réalisation de la figure 5.

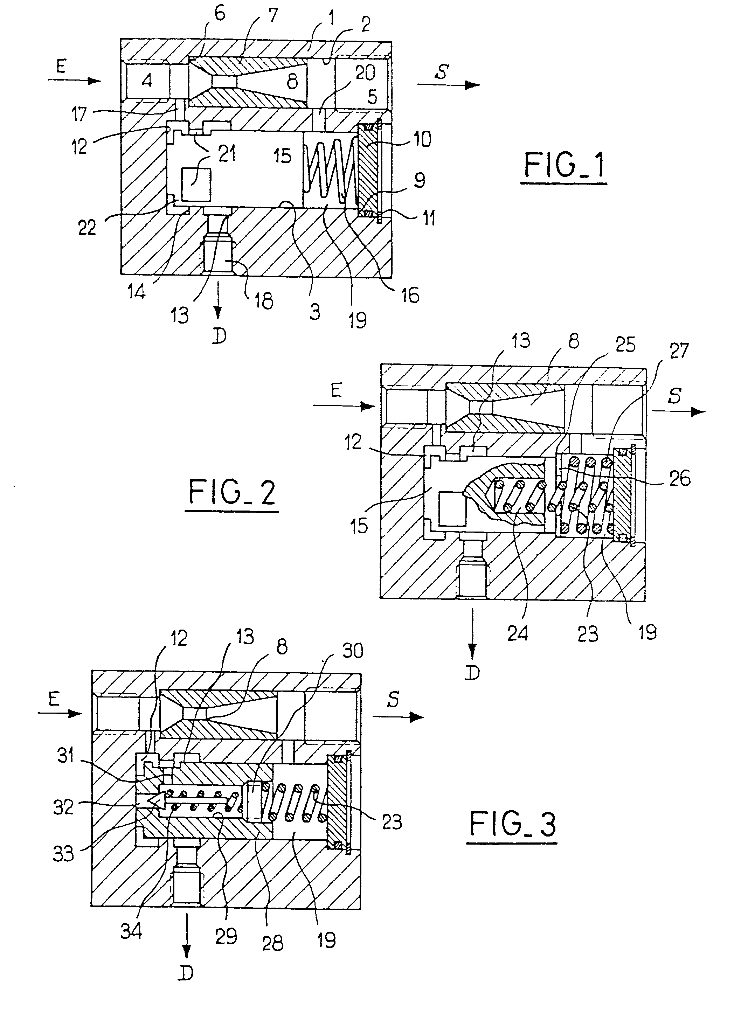

La figure 1 représente le schéma de principe d'une soupape de sécurité, conforme à l'invention, susceptible d'être intercalée dans une conduite à pression qui débouche sur un récepteur de fluide sous pression dans un système hydraulique pour lequel la source de pression peut être, par exemple, une pompe à engrenages ou à palettes classique. Le sens de l'écoulement est indiqué par les flèches -E- et -S- correspondant à l'entrée et à la sortie de la soupape.

Dans un bloc métallique formant le corps 1 de la soupape, on a percé un trou traversant 2 et un trou cylindrique borgne 3.

Le trou 2 a ses extrémités taraudées en 4 et 5 pour recevoir les raccords habituels avec les tuyauteries extérieures du système, un épaulement intermédiaire 6 séparant deux diamètres et une douille tubulaire 7 emmanchée à force dans le plus grand de ces deux diamètres, l'orifice de cette douille étant profilé comme un venturi 8 afin d'assurer certaines conditions déterminées de pression-débit.

L'entrée du cylindre 3 comporte un épaulement 9 logeant un bouchon 10 qui, maintenu en position par un circlips 11, le ferme hermétiquement ; à l'extrémité opposée, le trou cylindrique 3 est élargi  pour former une chambre 12 et près de celle-ci, une gorge annulaire constituant une deuxième chambre 13 séparée de la précédente par une cloison 14, laquelle est percée d'un orifice dont la surface fait partie de la surface cylindrique du logement ou cylindre 3.  Dans le cylindre, un tiroir mobile 15 s'ajuste hermétiquement ; il est poussé contre le fond du cylindre par un ressort hélicoïdal conique 16 derrière lequel se trouve le bouchon 10.  Conformément au dessin, le cylindre comprend une première chambre 12 ou chambre haute pression puisqu'elle est reliée avec l'entrée du venturi 8 par un lumière 17, une seconde chambre 13 ou chambre de décharge reliée au raccord 18 pour un tube de récupération de fluide, et une troisième chambre 19 où se trouve le ressort 16 et qui forme une chambre basse pression reliée par la lumière 20 à la sortie basse pression du venturi 8.  En d'autres termes, les extrémités du tiroir 15 correspondant aux première et troisième chambres se trouvent soumises aux pressions différentielles qui interviennent aux deux extrémités du venturi en fonction du débit du fluide qui circule par le trou 2 dans le sens ES.  Le tiroir 15 a en outre trois facettes latérales 21 faisant face à la cloison 14 dans la position au repos représentée, et d'une dimension longitudinale plus grande que la cloison, de façon à établir une communication directe entre les première et seconde chambres 12 et 13 respectivement, c'est-à-dire entre l'entrée de fluide sous pression E et la décharge D.

Au repos, en l'absence de pression de fluide à l'entrée E, le dispositif se maintien dans la position représentée par la figure.

Le venturi 8 et le ressort 16 sont calculés de manière qu'à partir d'un débit minimal dans le sens ES, la différence de pression entre les extrémités du venturi, c'est-à-dire dans les chambres 12 et 19 l'emporte sur la charge du ressort et déplace le tiroir 15 vers la droite de la figure, de sorte que les facettes 21 se décalent par rapport à la cloison 14 et l'extrémité gauche de la surface latérale du tiroir ferme complètement l'orifice de la cloison, interrompant ainsi la circulation entre la chambre haute pression 12 et la chambre de décharge 13.  Par ailleurs, l'ensemble aura des dimensions telles que cette condition ou état de fonctionnement se maintienne malgré les variations de débit prévisibles dans le cadre du fonctionnement normal du dispositif récepteur relié à la sortie S.

Si, au cours du fonctionnement décrit, la consommation du fluide à pression cesse à la sortie S, la pression dans le système s'élève soudainement jusqu'à la pression de court-circuit de la pompe reliée à l'entrée E, ce qui risque de causer des dommages dans le récepteur ou dans d'autres parties du système. Cependant, les pressions sont dans ce cas égalisées aux deux extrémités du venturi, c'est-à-dire dans les chambres 12 et 19, de sorte que le ressort 16 déplace le tiroir 15 vers la gauche, jusqu'à la position représentée, rétablissant ainsi la communication directe entre les chambres 12 et 13, de manière que tout le fluide arrivant de la pompe par l'entrée E passe directement à la décharge D à travers les chambres indiquées et les passages formés par les facettes 21 en laissant sans pression l'ensemble du système associé à la soupape. Lorsque cesse la condition de fermeture de la sortie S, un débit se rétablit à travers le venturi 8 et le dispositif revient à la condition de fonctionnement normal décrite antérieurement. Dans le cas contraire évidemment, si pendant le fonctionnement normal cesse l'alimentation en fluide<sup>sous</sup> pression à l'entrée E, la soupape reprend automatiquement la position de repos représentée, sous l'effet du ressort 16.

Conformément à ce qui vient d'être indiqué, pendant le fonctionnement normal de la soupape, la communication entre les chambres haute pression et de décharge 12 et 13 est maintenue fermée, c'est-à-dire qu'au moins la partie latérale<sup>22</sup> de la surface cylindrique du piston 15, comprise entre les facettes 21 et l'extrémité du tiroir fait face à la cloison 14, mais il est évident, au moins dans certains cas, que l'ensemble peut avoir des dimensions telles que le bord extrême gauche du tiroir arrive, lors du fonctionnement normal, jusqu'à la deuxième chambre 13 de sorte qu'il s'établit une chute du débit d'entrée E à partir d'un certain niveau de débit, et la soupape fonctionne à ce moment comme un régulateur ou un limiteur du débit atteint. A cet effet, le ressort 16 peut être conçu de manière à exercer une force différente à partir d'un certain niveau de compression ; ou bien on peut aussi utiliser un dispositif élastique additionnel comme indiqué sur la figure 2.

La figure 2 correspond globalement à la précédente et nous avons employé les mêmes références numériques pour les parties équivalentes. La différence consiste en ce que le ressort conique 16 a été

remplacé par un ressort cylindrique 23 qui vient se loger partiellement dans un orifice axial borgne 24 du tiroir 15, et le cylindre 3 présente un épaulement intermédiaire 25 formant appui pour une rondelle 26 d'un diamètre supérieur à celui du tiroir et sur laquelle s'appuie un ressort de compression cylindrique 27 aussi retenu par le bouchon 10 et dont la force est celle nécessaire au fonctionnement susmentionné en régulation ou limitation de débit.

Dans ce cas, la soupape fonctionne comme une soupape de sécurité à débit nul, comme dans la réalisation de la figure 1 tant que le tiroir 15 n'arrive pas à la rondelle 26 sous la charge du ressort 23, mais à partir du moment où la rondelle 26 commence à être déplacée, la charge du ressort 27 s'additionne à celle du ressort 23 pour fournir l'effet de régulation de débit.

Dans l'exemple de la figure 3, la soupape fonctionne comme dans le cas de la figure 1, mais elle remplit aussi la fonction de limitation de pression maximale. Pour cela, le tiroir 28, qui remplace le tiroir 15, a un orifice axial 29 qui débouche dans la chambre basse pression 19 et se trouve fermé par un bouchon 30 contre lequel vient s'appuyer le ressort 23. La chambre ainsi constituée, communique par le trou radial 31 avec une des facettes 21 et par un trou axial 32 avec la chambre haute pression 12 ; l'orifice intérieur de ce trou 32 forme un siège pour un obturateur 33 qui s'y applique sous l'effet du ressort 34 appuyé contre la face intérieure du bouchon 30. Ce dispositif d'obturation 33, 34 est taré en fonction de la pression maximale désirée dans la partie du système hydraulique associée à la soupape de sécurité.

Le fonctionnement est le même que dans le cas de la figure 1, mais si la pression de travail à l'entrée E dépasse le tarage du ressort 34, l'obturateur s'écarte de son siège en permettant la circulation directe entre la chambre haute pression et la chambre de décharge à travers les passages 32, 29 et 31, diminuant ainsi l'excès de pression sans que le système cesse de fonctionner.

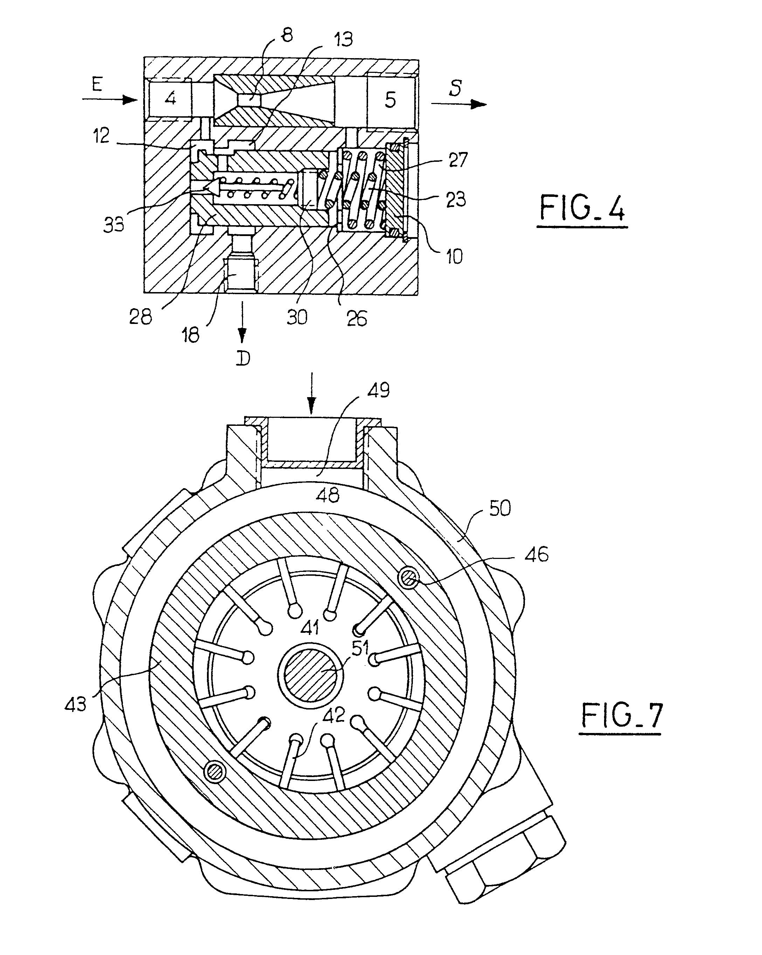

La variante de la figure 4 réunit les caractéristiques des figures 2 et 3 dans la réalisation de la figure 1. Ses parties ayant les mêmes références que dans le cas précédent sont parfaitement repérables, et le fonctionnement de l'ensemble est identique à celui décrit précédemment à propos de chaque cas individuel.

La figure 5 représente une version simplifiée du dispositif utilisé exclusivement comme soupape de sécurité. Dans ce cas le cylindre constitue le propre conduit de circulation et porte la référence 35. L'extrémité de sortie S est terminée par le raccord 36 derrière lequel s'applique le ressort 32. Le tiroir 37 est traversé par
une conduite de passage 38 avec un collet intermédiaire 39 qui sert de
butée de montage, d'une part pour le ressort 32 et d'autre part pour un
venturi 40 qui remplace le venturi 8 et dont l'extrémité d'entrée fait
face à l'orifice d'alimentation 4 du dispositif. Dans ce cas, le fonctionnement est exactement le même que celui de la figure 1, et les modifications décrites par rapport aux figures 1 et 2 sont également applicables.

Bien que la soupape de sécurité ait été décrit comme un
composant intercalable dans une conduite à fluide hydraulique faisant
partie d'un système à protéger, celle-ci peut être incorporée en toute
partie d'un équipement classique pour lequel elle serait utile, tel
qu'une pompe à palettes, par exemple, comme celle représentée dans les
figures 6 et 7, ou un boîtier de servo-direction pour véhicules, représenté dans la figure 8.

La pompe des figures 6 et 7 est classique dans la mesure
où elle comprend un rotor 41 à palettes 42 tournant à l'intérieur d'une
chambre non cylindrique constituée entre un anneau central 43 et deux
flasques 44 et 45. Cet ensemble forme un bloc (assemblé par boulons 46)
calé par un goujon 47 à l'intérieur de la chambre d'aspiration 48 dotée
d'un orifice d'admission 49 et située dans le corps de pompe 50 qui a
son tour contient la cage de roulement pour l'arbre 51 d'entraînement
du rotor 41. Le corps de pompe 50 est fermé par le couvercle 52 dans
lequel est intégrée la soupape de sécurité objet de l'invention, de
sorte que la sortie S de la soupape correspondant à l'orifice de refoulement 53 de la pompe.

Dans ce cas, la soupape correspond à la version de la figure 2 et ses divers éléments, indiqués d'une manière semblable, sont
parfaitement repérables. La sortie du venturi 8 communique directement
avec la sortie 53 de la pompe par la conduite 54 ; l'entrée de celle-ci
communique avec la sortie 55 de pression régnant dans la pièce 45 et la
chambre de décharge de la soupape communique avec la chambre d'aspiration
48 de la pompe par les conduites 56 et 57.

Bien que les pompes de ce genre soient généralement équipées d'une soupape de limitation de pression maximale dans le propre
couvercle 52, la réalisation de la figure 3 peut être également incorporée au tiroir 15 de cet exemple.

La figure 8 montre un boîtier de servo-direction 58 qui comprend un cylindre 59, à l'intérieur duquel se déplace un piston écrou 60 qui actionne, par une transmission à crémaillère, par exemple, le mécanisme de direction habituel. L'axe fileté 61 commandant le piston est entraîné à sont tour par une barre de torsion 62 attaquée par la colonne de direction 63. L'axe 61 est solidaire par une clavette 64 de l'élément 65 rotatif dans un logement complémentaire du boîtier de direction et qui constitue le carter du distributeur de la servo-direction; dans ce carter tourne aussi le noyau 66 du distributeur de servo-direction solidaire de la colonne de direction. Dans le cas présent, le distributeur est du type à rainures longitudinales disposées sur sa circonférence 67 et 68, communiquant d'une part avec l'entrée d'huile par la gorge annulaire 69 et les lumières 70 de la cage du distributeur et d'autre part avec l'orifice de sortie 71 du boîtier de servo-direction 58 par la gorge annulaire 72, la lumière 73, l'intérieur 74 du noyau 66 et l'orifice 75 du noyau 66. La soupape de sécurité se trouve dans un logement cylindrique 76 faisant partie du conduit d'admission 77 et terminé par le raccord d'alimentation 78. On utilise pour la soupape de sécurité un mode de réalisation conforme à celui de la figure 5.

REVENDICATIONS

1. Soupape de sécurité de circuits hydrauliques sensible à une absence de débit, pour circuits comprenant une source de fluide hydraulique sous pression et un récepteur devant être actionné par ce fluide, pour la protection contre des surpressions résultant de l'annulation du débit consommé par le récepteur, caractérisée essentiellement en ce qu'elle comprend un dispositif étrangleur (8), intercalé dans le conduit reliant la source avec l'entrée du récepteur et capable de créer, dans le fluide circulant, une perte de charge qui occasionne une pression élevée à l'extrémité (4) en amont de l'étrangleur et une pression basse à l'extrémité (5) en aval de celui-ci, un espace fermé (3), à l'intérieur duquel se déplace hermétiquement un élément obturateur (15) qui le divise en une chambre haute pression (12), reliée avec l'extrémité (4) en amont de l'étrangleur, et une chambre basse pression (19), reliée à l'extrémité (5) en aval de l'étrangleur, l'élément obturateur étant repoussé élastiquement vers la chambre haute pression ; une chambre de décharge (13), reliée avec l'entrée de la pompe ou une décharge et avec la chambre haute pression (12) à travers des moyens d'obturation variable (14,21) comprenant ledit élément obturateur (15), la disposition étant telle que la charge élastique de l'élément obturateur le maintient dans une position dans laquelle lesdits moyens d'obturation sont ouverts et établissent une communication entre la chambre haute pression et la chambre de décharge, en l'absence de différence de pression entre les chambres haute (12) et basse (19) pression de l'enceinte, cet élément étant néanmoins déplacé quand un débit de fluide traversant l'étrangleur amène l'élément obturateur à fermer la communication entre la chambre haute pression et la chambre de décharge.

2. Soupape de sécurité de circuits hydrauliques selon la revendication 1, caractérisée essentiellement par le fait que ledit élément obturateur est un tiroir (15) mobile se déplaçant hermétiquement dans un cylindre (3) fermé à ses deux extrémités formant les chambres haute (12) et basse (19) pression, poussé vers la première par un ressort (16) situé dans la seconde, le cylindre ou le tiroir étant creusés d'une gorge annulaire (13) qui forme la chambre de décharge, adjacente de la chambre haute pression, le tiroir étant pourvu de lumières latérales (21) qui coopèrent avec la portion de cylindre comprise entre les deux chambres.

3. Soupape de sécurité de circuits hydrauliques selon les revendications 1 ou 2, caractérisée essentiellement par le fait que les lumières du tiroir sont formées par des dépressions superficielles (21), et que la course de ce dernier est supérieure à la distance existant en position de repos entre l'extrémité dudit tiroir, correspondant à la chambre haute pression (12), et la chambre de décharge, le tiroir pouvant être déplacé jusqu'à ce que ladite extrémité atteigne la chambre de décharge (13) et que l'ouverture la mette à nouveau en communication avec la chambre haute pression, en fonction de régulation du débit.

4. Soupape de sécurité de circuits hydrauliques selon la revendication 3, caractérisée essentiellement par des moyens élastiques à force variable (26,27) s'appliquant audit tiroir, pour s'adapter au fonctionnement et à la fonction de régulation en limitation du débit.

5. Soupape de sécurité de circuits hydrauliques selon la revendication 4, caractérisée en ce qu'elle comprend un dispositif élastique (27) parallèle à celui (19) qui repousse l'élément obturateur (15), et avec lequel il s'accouple en atteignant la position correspondante au début de la fonction de régulation de débit.

6. Soupape de sécurité de circuits hydrauliques selon la revendication 1, caractérisée essentiellement par le fait que l'élément obturateur (15) est muni d'une soupape de dérivation (33,34) ou de pression maximale.

7. Soupape de sécurité de circuits hydrauliques selon l'une des revendications 1 à 6, caractérisée essentiellement par le fait que l'élément obturateur (15) possède une cavité intérieure (29) communiquant d'une part, avec la chambre de décharge (13), et d'autre part, avec la chambre haute pression (12) à travers un siège, sur lequel agit un obturateur (33) chargé par un dispositif élastique (34).

8. Soupape de sécurité de circuits hydrauliques selon les revendications 1 ou 2, caractérisée essentiellement par le fait que les conduites d'arrivée et de sortie de fluide sous pression sont reliées respectivement aux chambres haute et basse pression précitées et que le tiroir (37) a une forme tubulaire de manière à assurer le passage pour ce fluide, le dispositif étrangleur (40) étant placé à l'intérieur de ce passage.

9. Soupape de sécurité de circuits hydrauliques, selon l'une des revendications 1 à 8, caractérisée par le fait qu'elle se trouve intégrée à l'une des parties du corps d'une pompe délivrant un fluide sous pression pour système hydraulique, les extrémités d'entrée et de sortie du dispositif étrangleur (8) étant reliées respectivement à la chambre de pression (55) et à la sortie (53) de la pompe, la chambre haute pression et la chambre de décharge de la soupape étant reliées respectivement à la chambre de pression (55) et à la chambre d'aspiration (48) de la pompe.

10. Soupape de sécurité de circuits hydrauliques selon l'une des revendications 1 à 8, caractérisée par le fait qu'elle est intégrée dans une des parties d'un boîtier de servo-direction pour véhicules, les extrémités d'entrée et de sortie du dispositif étrangleur (40) étant reliées respectivement à un conduit connecté au raccord d'entrée (78) d'huile et à un conduit connecté à un élément (65) du distributeur de servo-direction.

FIG_1

FIG_2

FIG_3

FIG_4

FIG_7

FIG_5

FIG_6

0033698

## FIG_8

# 0033698

**Office européen des brevets**

## RAPPORT DE RECHERCHE EUROPEENNE

Numéro de la demande

EP 81 40 0149

### DOCUMENTS CONSIDERES COMME PERTINENTS

| Catégorie | Citation du document avec indication, en cas de besoin, des parties pertinentes | Revendica-tion concernée |
|---|---|---|
| X | FR - A - 2 070 371 (SOCIETE D'APPLICATION DES MACHINES MOTRICES) <br><br> * En entier * <br><br> --- | 1,8,9 |
| | FR - A - 2 417 881 (JIDOSHA KIKI COMPANY) <br><br> * Page 8, lignes 14-31; figure 3 * <br><br> --- | 1,2,10 |
| | US - A - 3 656 870 (KUSAKABE et al.) <br><br> * Colonne 3, ligne 56 à colonne 5, ligne 22; figure 3; figure 8 * <br><br> --- | 1,2,8, 9 |
| | FR - A - 2 039 095 (TOYODA KOKI K.K.) <br><br> * Figure 3 * <br><br> --- | 1,2,9 |
| | US - A - 2 829 599 (JONES) <br><br> * Colonne 4, lignes 60-74; figure 1 * <br><br> --- | 1,6,7 |
| | FR - A - 2 347 249 (DAIMLER BENZ) <br><br> * Figure 1c * <br><br> --- | 1,10 |
| | FR - A - 2 040 124 (TOYODA KOKI K.K.) <br><br> * Figure 5 * <br><br> --- | 1 |
| | FR - A - 2 383 057 (DAIMLER BENZ) <br><br> * Page 6, lignes 7-23; Figures 2 et 4 * <br><br> --------- | 4,5 |

**CLASSEMENT DE LA DEMANDE (Int. Cl. 3)**

F 15 B 20/00
F 04 C 15/04
B 62 D  5/06

**DOMAINES TECHNIQUES RECHERCHES (Int. Cl. 3)**

F 15 B
B 62 D
F 04 C
F 01 C

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 13.04.1981 | THOMANN |

OEB Form 1503.1  06.78